Europäisches Patentamt

European Patent Office

Office européen des brevets

(19)

(11) Publication number: **0 119 179**
**A1**

(12)  # EUROPEAN PATENT APPLICATION

(21) Application number: **84850081.5**

(22) Date of filing: **12.03.84**

(51) Int. Cl.³: **C 02 F 1/52**
**C 01 G 49/14, B 01 D 21/01**

(30) Priority: **15.03.83 SE 8301417**

(43) Date of publication of application:
**19.09.84 Bulletin 84/38**

(84) Designated Contracting States:
**AT BE CH DE FR GB IT LI LU NL SE**

(71) Applicant: **Boliden Aktiebolag**
**Box 5508**
**S-114 85 Stockholm(SE)**

(72) Inventor: **Hellström, Bengt Louis Christian**
**Kustvägen 34 A**
**S-261 75 Asmundtorp(SE)**

(74) Representative: **Inger, Lars Ulf Bosson et al,**
**Boliden AB Patent & Trade Marks Box 5508**
**S-114 85 Stockholm(SE)**

(54) Pumpable water-purifying compositions containing iron(II) sulphate, and a method for their manufacture.

(57) A pumpable dispersion for water-purifying purposes contains iron (II) sulphate, the iron (II) sulphate being dispersed in a water phase having a dispersing agent comprising bentonite. The best dispersion properties are obtained with bentonite contents of 1-2%, and with $Fe^{3+}$ ions present in the composition. The amount of $FeSO_4$ heptahydrate present may be about 80% of the composition.

The invention also relates to a method for producing the composition.

EP 0 119 179 A1

## PUMPABLE WATER-PURIFYING COMPOSITIONS CONTAINING IRON(II)SULPHATE, AND A METHOD FOR THEIR MANUFACTURE

### Description

### Technical Field

The invention relates to a water-pyrifying composition containing divalent iron sulphate, and to a method for manufacturing said composition.

### Background Art

Divalent iron sulphate in the form of $FeSO_4 \cdot 7H_2O$, i.e. iron(II)sulphate heptahydrate is a fatal product which is obtained, inter alia, in pickling baths in which iron and steel are treated with sulphuric acid, and when producing titanium oxide from titanium ores which contain iron, primarily ilmenite, the iron sulphate being removed from the sulphate solution by freezing. It is necessary to dump each day large quantities of iron(II)sulphate heptahydrate thus obtained, which, because the heptahydrate readily dissolves in water, constitutes serious environmental problems, and consequently special protective measures must be taken, to prevent the contamination of the soil and water at the dumping site. Moreover, because the physical properties of iron(II)sulphate heptahydrate are so poor, the handling of said heptahydrate becomes problematic, since when handled it forms a substantially tacky mass which cannot be simply stored in conventional storage locations of, for example, the silo type. Neither can the heptahydrate be transported, dispensed, or fed through conventional devices and appliances intended for solid, pulvurent products.

Even though it were possible to find a large market for the use of iron(II)sulphate heptahydrate as a water-purifying agent, it has been found that the demand is limited on the part of water-purification works, which is probably due to the problems associated with the handling of the product. One way of making the product more attractive as a water-purifying agent, is to heat the product so as to form a monohydrate, which exhibits far better physical referred to has not always been found to be completely stable when transported over long distances, where the concentrate is constantly subjected to vibration, and consequently has not fully met the requirement of the market.

SE-A 8204162-5 discloses a method of dispersing iron(II)sulphate heptahydrate in an aqueous solution of calcium chloride, the aqueous solution containing iron(III)chloride. Although this dispersion is, in itself, stable and can contain large quantities of iron, the dispersion has an excessively low pH (about 0), which can cause serious corrosion problems in respect of the equipment used for handling and dispensing the product. The product is extremely efficient, however, in purifying alkaline water.

## Disclosure of the Invention

The object of the present invention is to provide a concentrated water-purifying agent containing large quantities of divalent iron from a solid iron(II)sulphate starting material, which can be handled, transported, stored and dispensed without encounting those difficulties mentioned in the introduction. A further object of the invention is to provide a market for the waste product iron(II)sulphate heptahydrate.

It has now surprisingly been found possible to produce in accordance with the invention a concentrate, which has a much higher Fe-content than was previously possible, and which remains completely stable during transportation, the concentrate according to the invention comprising a composition which contains iron(II)sulphate and is characterized in that the iron(II)sulphate is dispersed in a water phase with a bentonite dispersing agent. Thus, the composition according to the invention comprises a pumpable suspension of solid iron(II)sulphate in a water phase. Subsequent to adding the aforementioned dispersing agent, the suspension exhibits but slight settling tendencies, even when the solid sulphate has the form of relatively large particles, and hence it is not necessary to grind the sulphate or to degradate the same in any way prior to forming the dispersion. Such stable suspensions are normally referred to as dispersions.

An important advantage afforded by the invention is that the composition can be readily made still more effective, by maintaining in the water phase of the composition a sufficient quantity of one or more of the ions $Fe^{2+}$, $Fe^{3+}$ and $Al^{3+}$, to effectively purify the water being treated. For example, the water phase may advantageously contain an aqueous solution of iron(III)ions, such as in the form of sulphatochloride, this solution being commersially available and used for water-purifying purposes. In addition to the effect afforded by Fe(II) in water-purifying processes, it is also possible, in this way, to obtain an additional water-purifying effect, through the action of the components Fe(III) and/or Al(III). The properties of these latter ions are such as to render them efficient precipitating agents for, inter alia, phosphate ions, heavy metals, bacteria, virus and the eggs of intestinal worms, and because of their good flocculating properties, such ions produce a clear output water. In this respect, all material suspended in the water is also flocculated out.

The pH of the composition is about 0.5-2, depending upon the content of iron sulphatochloride solution and the process by which it has been produced. Certain iron chloride solutions at present available on the market are produced from pickling baths based on hydrochloric acid, and consequently have a low pH.

It has also been found that the ingoing bentonite has a positive effect on the growth of flocs, when the composition is dispersed into a body of water to purify the same. The resultant flocs become better and more stable, and have been found able to reform when broken up.

In the case of small-scale sewage-water purification works of lower oxidation capacity, it is suitable to supply a given quantity of iron(III)salt, since it is primarily iron(III)ions which produce the flocs, and the iron(II)ions must be further oxidized to iron(III) in order to provide good flocculation.

Thus, the composition comprises a dispersion of good stability, which means that it can be handled, stored and dispensed in liquid form, for example by means of pumps, which is an obvious advantage in the case of a water-purifying agent.

A further obvious advantage afforded by the composition according to the invention is that it can contain relatively high contents of active iron(II)product, calculated on the total weight, in comparison with an aqueous solution of iron(II)sulphate. When the solid iron(II)sulphate content is increased, however, the viscosity of the dispersion also increases, which gives rise to a practical limit, above which the dispersion cannot be handled without some disadvantage. Consequently, the composition used preferably contains less than about 80% solid iron(II)sulphate calculated as heptahydrate on the total weight of the composition. The amount of dispersion agent required to obtain an effective dispersion is surprisingly low, and is suitably balanced against the requirements placed on the durability and stability of the dispersion. Thus, the composition preferably contains a dispersing agent in an amount of 0.5-4% by weight, preferably 1-2% by weight. When this upper limit is exceeded, there is obtained a highly viscous product, which may be difficult to dispense or meter in certain plants, while quantities below the 0.2% by weight limit do not result in a sufficiently durable dispersion. It has been found that a particularly stable dispersion is obtained with a composition containing about 35% iron(II)sulphate calculated as heptahydrate, and at least 1% bentonite calculated on the total composition, and about 54% aqueous solution of iron(III)sulphatochloride (12% Fe). A composition thus prepared will contain 13.1% iron in total, of which 50% is Fe(II) in iron sulphate and 50% is Fe(III) in the solution. Thus, the total iron content of the composition according to the invention is considerably higher than in an aqueous solution of iron(II)sulphate, which as previously mentioned is only 2.9% iron in saturated solution.

The composition is initially prepared from an aqueous slurry of iron(II)sulphate heptahydrate, optionally containing iron(III)sulphatochloride. Added to the slurry, while stirring, is an aqueous dispersion of bentonite (about 10-20% bentonite in the water), the dispersion being allowed to ripen so as to swell the bentonite, whereafter the entire mixture is vigorously stirred, in order to break down the larger bentonite aggregates. The ingoing bentonite preferably has a particle aggregate size of beneath 44 µm.

The invention will now be described in more detail with reference to a number of examples concerning experiments made in the manufacture of a dispersion of solid iron(II)sulphate heptahydrate in various ways.

## Example 1

545 kg of fatal $FeSO_4Cl$ containing 12% Fe and about 50% $H_2O$ were mixed with 364 kg $FeSO_4 \cdot 7H_2O$ to form a thick porridge. A dispersion of 77 kg water and 13.6 kg bentonite (VOLCLAY) was then added to the porridge while stirring, and the mixture was allowed to stand for 5 hours to enable the bentonite to swell, whereafter the entire mixture was vigorously agitated. There was obtained a stable dispersion of iron(II)sulphate, which had shown no sedimentation tendencies after 7 days. The dispersion contained 13.1% Fe (50% $Fe^{2+}$, 50% $Fe^{3+}$).

## Example 2

280 kg fatal $FeSO_4Cl$ containing 12% Fe and about 50% $H_2O$ were mixed with 564 kg $FeSO_4 \cdot 7H_2O$ to form a thick porridge. The porridge was then admixed with 93 kg of a dispersion of 79 kg water and 14 kg bentonite, whereafter the mixture was vigorously agitated. A stable dispersion containing 13.4% Fe (75% $Fe^{2+}$; 25% $Fe^{3+}$) was obtained.

## Example 3

302 kg of fatal $FeSO_4Cl$ containing 12% Fe and about 50% $H_2O$ were mixed with 604 kg $FeSO_4 \cdot 7H_2O$ and 19 kg water, to form a thick porridge. The porridge was admixed, while stirring, with a dispersion of 64 kg water and 11.3 kg bentonite, whereafter the total mixture was vigorously agitated. There was obtained a stable dispersion of iron(II)sulphate, which contained 14.5% Fe (75% $Fe^{2+}$; 25% $Fe^{3+}$).

## Example 4

748 kg $FeSO_4 \cdot 7H_2O$ were admixed with 159 kg water to form a thick porridge. The porridge was admixed, while stirring, with a dispersion of 79 kg water and 14 kg bentonite, whereafter the entire mixture was vigorously agitated. A stable dispersion containing 13.4% Fe was obtained. pH 2.5.

## Example 5

798 kg $FeSO_4 \cdot 7H_2O$ were mixed with 118 kg water to form a thick porridge. The porridge was then admixed with a dispersion of 71 kg water and 12.6 kg bentonite, whereafter the entire mixture was vigorously agitated. A stable dispersion containing 14.4% Fe was obtained. pH 2.5.

## Example 6

480 kg of fatal $FeSO_4Cl$ containing 12% Fe and about 50% $H_2O$ were mixed with 320 kg $FeSO_4 \cdot 7H_2O$ to form a thick porridge. The porridge was then mixed, while stirring, with a dispersion of 170 kg water and 30 kg bentonite, whereafter the entire mixture was vigorously agitated. A stable dispersion containing 11.4% Fe (50% $Fe^{2+}$, 50% $Fe^{3+}$) was obtained.

## Example 7

1200 g av a pickling bath containing 7% $Fe^{3+}$ were mixed with 3900 g of $FeSO_4 \cdot 7H_2O$, to form a thick porridge. The porridge was admixed, while vigorously agitating the porridge, with a dispersion of 45 g bentonite (VOLCLAY, SS 100, retailed by Ahlsell, Stockholm) and 255 g $H_2O$ to form a stable dispersion containing 15% Fe.

## Example 8

75 kg of a pickling bath solution containing 7% Fe were mixed with 200 g of $FeSO_4 \cdot 7H_2O$, to form a thick porridge. The porridge was then admixed, while vigorously agitating the porridge, with a dispersion of 5 g bentonite and 25 g $H_2O$, to form a stable dispersion of iron(II)sulphate containing 12.8% Fe. The dispersion was then admixed with 5 g $NaClO_3$ to oxidate $Fe^{2+}$ to $Fe^{3+}$. The residual content of $Fe^{2+}$ was 6.9%.

As beforementioned, the ingoing $Fe^{2+}$ ions can be oxidized to $Fe^{3+}$, by simply adding $NaClO_3$. Consequently, $NaClO_3$ in respective amounts of 0.5% and 1% was added to a stable dispersion of iron(II)sulphate (100% $Fe^{2+}$) with 13.4%

Fe, the amount $Fe^{2+}$ being reduced respectively to 11.6% $Fe^{2+}$ and 9.9% $Fe^{2+}$ instead, i.e. the dispersions contained 1.8 and 3.5% $Fe^{3+}$ respectively.

In the aforegiven examples, the bentonite dispersion has normally contained 15-20% bentonite. The bentonite dispersion should stand for 5-24 hours, to enable the bentonite to swell fully.

In those cases where solely $FeSO_4 \cdot 7H_2O$ was included it is necessary to supply additional water, in order to compensate for the liquid(water)drop through the exclusion of $FeSO_4Cl$-solution.

When a higher pH than 2.5 is desired, it is possible to add calcium carbonate, as illustrated above, or some other source of calcium.

## CLAIMS

1. A dispersion for water-purifying purposes containing iron(II)sulphate, characterized in that the iron(II)sulphate is dispersed in a water phase with a dispersing agent comprising bentonite.

2. A dispersion according to claim 1, characterized in that the water phase contains one or more of ions $Fe^{2+}$, $Fe^{3+}$ and $Al^{3+}$.

3. A dispersion according to claim 2, characterized in that the water phase comprises mainly a solution containing iron(III).

4. A dispersion according to anyone of claims 1-3, characterized in that said dispersion includes up to about 80% solid iron(II)sulphate, calculated as heptahydrate on the total weight of the composition.

5. A dispersion according to anyone of claims 1-4, characterized in that the dispersing agent is present in an amount of 0.2-4% by weight of the total composition.

6. A dispersion according to anyone of the preceding claims, characterized in that said dispersion contains about 35-80% iron(II)sulphate, calculated as heptahydrate, and about 1.1-1.5% bentonite in an aqueous solution of iron(III)containing ions.

7. A dispersion according to anyone of the preceding claims, characterized in that the dispersion also contains an oxidation agent, for the oxidation of $Fe^{2+}$ to $Fe^{3+}$.

8. A method for preparing the dispersion according to claims 1-7, beginning from solid iron(II)sulphate, characterized in that finely divided iron(II)sulphate heptahydrate in slurried form is admixed with a dispersing agent having the form of an aqueous dispersion of up to 25% bentonite, whereafter the entire mixture is thoroughly agitated to form a stable dispersion.

9.    A method according to claim 8, characterized by permitting the bentonite dispersion to age for at least 5 hours prior to adding said dispersion.

10.    A method according to claims 8-9, characterized in that the oxidant for oxidizing $Fe^{2+}$ to $Fe^{3+}$ is added to the dispersion mixture.